# EUROPÄISCHE PATENTANMELDUNG

(11) **EP 0 871 050 A2**
(43) Veröffentlichungstag der Anmeldung: **14.10.1998**
(21) Anmeldenummer: 98250115.7
(22) Anmeldetag: 27.03.1998
(51) Int. Cl.: G02B 6/42

(54) **Laseranordnung mit einem gütegeschalteten Laser**

(30) Priorität: 07.04.1997 DE 19714190
(71) Anmelder: Laser- und Medizin-TechnologieGGmbH Berlin, 12207 Berlin (DE)
(72) Erfinder: Bostanjoglo, Georg, Dr.-Ing., 10711 Berlin (DE); Müller, Gerhard, Prof. Dr.-Ing. Dr. h.c., 14129 Berlin (DE); Beck, Thomas, Dipl.-Phys., 16341 Berlin (DE)
(74) Vertreter: Christiansen, Henning, Dipl.-Ing.

(57) **Zusammenfassung**

Laseranordnung (1), mit einem gütegeschalteten Laser (2), insbesondere einem elektrooptischen oder durch Phasenkonjugation gütegeschalteten Festkörperlaser, und einer Lichtwellenleiter-Baugruppe (1A), die mindestens eine Lichtleitfaser (5) aufweist, zur Übertragung der Laserstrahlung, wobei die effektive Laserstrahlungs-Einkoppelfläche der Lichtwellenleiter-Baugruppe größer als die mittlere Querschnittsfläche einer einzelnen Lichtleitfaser ist.

## Beschreibung

Die Erfindung betrifft eine Laseranordnung gemäß dem Oberbegriff des Anspruchs 1 und ein Verfahren zur Herstellung einer solchen.

Gütegeschaltete Laser zeichnen sich aus durch hohe Pulsspitzenleistung aufgrund geringer Pulsdauer. Diese Eigenschaft macht sie geeignet für bestimmte Felder der Materialbearbeitung, wie Bohren und Abtragen. Ein spezielles weiteres Einsatzgebiet ist die Säuberung von verschmutzten oder beschichteten Oberflächen. Für diese Einsatzgebiete sind akustooptisch gütegeschaltete cw-gepumpte Nd:YAG-Laser mit Pulsdauern von 100-1000 ns weniger geeignet als elektrooptisch gütegeschaltete Nd:YAG-Pulslaser mit Pulsdauern von einigen ns bis einigen 10 ns. In diesem Zeitregime ist der Wärmeeintrag in das unterliegende Material geringer, so daß auch schonendes oder selektives Abtragen einzelner Lackschichten, wie beispielsweise Sprühfarbe von lackierten Untergründen (Graffiti), das Säubern von hochwertigen Oberflächen aus Holz, Putz und Metallen von Staub, Farbe, Oxiden und nicht näher zu bezeichnenden Schmutzschichten etc. möglich ist.

Ein großer Vorteil von Nd:YAG-Lasern gegenüber Excimer-und CO2-Lasern ist die mögliche Verwendung von Lichtleitfasern aus Quarzglas. Sie leiten die Laserstrahlung ohne Einsatz aufwendiger Umlenkoptiken präzise und gefahrlos an den Bearbeitungsort. Im Zusammenhang mit einer dem konkreten Einsatzzweck adäquaten Gestaltung von Bearbeitungsköpfen oder Handstücken ist eine flexible, preiswerte und robuste Strahlführung durch Lichtleiter möglich und mannig-faltig erprobt. Die Zerstörschwelle der Endfläche solcher Lichtleitfasern liegt in der Größenordnung von 0,5 - 1,0 GW/cm². Das ist völlig ausreichend für cw-gepumpte freilaufende und akustooptisch gütegeschaltete Laser bis hinauf in den kW-Bereich. Auch freilaufende Pulslaser können ohne Probleme in Lichtleitfasern eingekoppelt werden. Die Leistungsdichte elektrooptisch oder durch Phasenkonjugation gütegeschalteter Laser mit Pulsenergien von einigen 100 mJ überschreitet jedoch um 1-3 Größenordnungen die Zerstörschwelle von Quarzglasfasern der üblichen Kerndurchmesser von 0,1 - 1,0 mm.

Kommerzielle Lasergeräte mit Glasfasertransmission zum Oberflächenbehandeln wie^{.}Säubern, Entlacken u.ä. enthalten elektrooptisch oder akustooptisch gütegeschaltete Laser. Durch künstliche Pulsverlängerung wird die Pulsdauer auf über 100 ns erhöht, um die Leistungsdichte unter der Zerstörschwelle der Faserendflächen zu halten. Dadurch wird jedoch natürlich die Pulsleistung herabgesetzt, was in vielen Fällen die Qualität des Bearbeitungsergebnisses verschlechtert: Es treten Aufschmelzungen, Abbrand, Absplitterungen, sonstige Zerstörung oder Modifikation wie z.B. gleichzeitiger Abtrag des unterliegenden Materials auf.

Andere Nd:YAG-Lasergeräte für die Oberflächenbehandlung verwenden eine Spiegelarm-Strahlübertragung, wie sie von CO₂-Lasern bekannt ist. Hier kann der Strahlquerschnitt ähnlich wie im Laserresonator im mm-Bereich gehalten werden, so daß keine Schädigungen optischer Komponenten auftreten. Spiegelarm-Strahlführungen haben jedoch einige Nachteile im Vergleich zu Glasfasern: Sie sind mechanisch aufwendig und deshalb teuer, relativ starr, sperrig, schwer und stoßempfindlich.

Der Erfindung liegt die Aufgabe zugrunde, eine Laseranordnung der gattungsgemäßen Art zu schaffen, welche die Verwendung von Lichtleiterfasern zur Strahlübertragung ermöglicht, ohne daß durch die hohe Pulsleistung Schädigungen oder Zerstörungen an den Komponenten hervorgerufen werden.

Diese Aufgabe wird erfindungsgemäß durch die kennzeichnenden Merkmale des Hauptanspruchs in Verbindung mit den Merkmalen des Oberbegriffs gelöst.

Die Erfindung schließt den Gedanken ein, in Abkehr von dem bisher beschrittenen Weg der Verringerung der Pulsleistung die Einkoppelfläche für die Lichtleiterübertragung zu vergrößern.

In einer vorteilhaften Variante der Ausführung der Erfindung ist vorgesehen, daß die Lichtwellenleiter-Baugruppe mindestens eine Lichtleitfaser mit einer gegenüber ihrer mittleren Querschnittsfläche vergrößerten Endfläche aufweist. Diese vergrößerte Endfläche ist insbesondere durch einen sogenannten Taper gebildet, wie er bei der Herstellung von Lichtleitfasern entsteht.

In einer anderen Variante, die auch mit der erstgenannnten kombiniert sein kann, umfaßt die Lichtwellenleiter-Baugruppe eine Mehrzahl von, insbesondere (mit mehr oder weniger großem Abstand) gebündelten, Lichtleitfasern.

Einer Resonatorendfläche des Lasers (der zur Strahlauskopplung dienenden) ist ein den primären Laserstrahl in eine Mehrzahl von Teilstrahlen zerlegendes und die Teilstrahlen im wesentlichen in eine Ebene fokussierendes optisches Element zugeordnet. Dieses weist insbesondere eine Struktur mit einer Mehrzahl von diffraktiven und/oder den einfallenden Laserstrahl in unterschiedliche Richtungen reflektierenden bzw. eine Mehrfachreflexion an dem Umfangsflächen bewirkenden Bereichen auf. In besonders kompakter Ausführung ist es zusammenhängend mit einem Resonatorspiegel ausgeführt, insbesondere auf der dem Lasermedium zugewandten Seite als Resonatorspiegel ausgebildet.

In der Ausführung mit einer Mehrzahl von Lichtleitfasern weist die Lichtwellenleiter-Baugruppe ein Halteelement für die Lichtleitfasern auf, das insbesondere nahe der Fokussierungsebene des zerlegenden und fokussierenden Elementes angeordnet ist.

Auf der Auskoppelseite der Lichtwellenleiter-Baugruppe ist zweckmäßigerweise ein Schutz- und/oder Strahlhomogenisierungselement, insbesondere ein Schutzglas, eine Streuscheibe, ein diffraktives Element oder ein mehrfachreflektierendes Element, vorgesehen, das zum Schutz der Auskoppelflächen vor Verschmutzung oder Zerstörung während Bearbeitungsvorgängen bzw. zur Vergleichmäßigung der Energieverteilung über eine Bearbeitungsfläche dient. Dieses Element kann in besonders kompakter Bauweise mit der auskoppelseitigen Endfläche bzw. den Endflächen der Lichtleitfaser oder -fasern fest verbnden, insbesondere in diese integriert, sein.

Die auskoppelseitigen Endflächen der Lichtleitfasern sind zur Festlegung einer definierten Bearbeitungsfläche bevorzugt in einer regulären geometrischen Anordnung, insbesondere in Linien-, Rechteck, Kreis- oder Kreissegmentanordnung, gehaltert.

Unter Fortfall eines Schutz- oder Homogenisierungselementes können aber die Faserendflächen auch direkt auf das Werkstück abgebildet werden, indem die Lichtleitfasern insbesondere bis unmitelbar an die Werkstückoberfläche herangeführt sind. In beiden Varianten kann ein speziell als Schutzgas für den Bearbeitungskopf und/oder als Bearbeitungshilfsgas, etwa als Transportgas für Bearbeitungsrückstände bzw. -produkte, geeignetes Gas in die Bearbeitungszone geleitet werden.

Bei einem bevorzugten Verfahren zur Herstellung der Laseranordnung ist vorgesehen, daß mittels des zerlegenden und fokussierenden optischen Elements auf einen Halteelement-Grundkörper die Teilstrahlen abgebildet und hierdurch die Orte für die Fixierung der einkoppelseitigen Endflächen der einzelnen Lichtleitfasern bestimmt und anschließend an diesen Orten Durchführungen für die Lichtleitfasern erzeugt werden. Der Halteelement-Grundkörper kann hierfür insbesondere vorab mit einer photosensitiven Beschichtung versehen werden. Anschließend können die Durchführungen in dem Halteelement unter Nutzung der Teilstrahlen unmittelbar innerhalb der Laseranordnung ausgearbeitet werden, was den Herstellungsprozeß durch Wegfall mehrerer Handdhabungsvorgänge wesentlich vereinfacht.

Vorteilhafte Weiterbildungen der Erfindung sind im übrigen in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine schematische Längsschnittdarstellung einer bevorzugten Ausführungsform der Erfindung,
- Figur 2: eine Detaildarstellung einer Laseranordnung in einer modifizierten Ausführung,
- die Figuren 3a bis 3c: Skizzen verschiedener werkstückseitiger Anordnungen von Lichtleitfasern ohne Auskoppelungsoptik zur Direktanwendung und
- Figur 4: eine schematische Darstellung zur Einkopplung eines primären Laserstrahls in eine getaperte Lichtleitfaser.

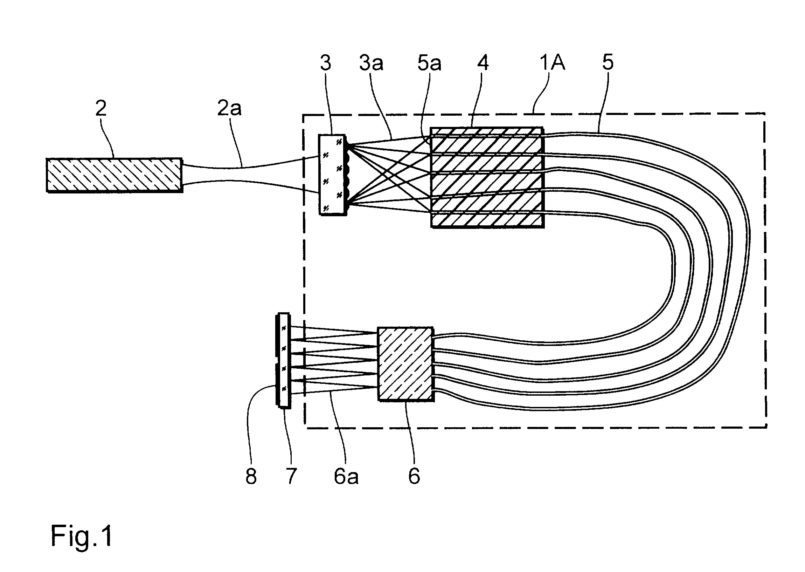

Fig. 1 zeigt als bevorzugtes Ausführungsbeispiel eine Prinzipskizze der kompletten Anordnung 1, bestehend aus einem gütegeschalteten Festkörperlaser 2 mit integrierten (nicht gesondert bezeichneten) Mitteln zur Formung des Laserstrahls 2a, einem kombinierten diffraktiven Element 3 zur Strahlteilung in Teilstrahlen 3a und zu deren Fokussierung bzw. Einkopplung, einer Halteplatte 4 für eine Mehrzahl von Lichtleitfasern 5 und einer opaken Auskopplungsplatte 6 mit integrierter, dem Anwendungszweck angepaßten Strahlformung. Die Komponenten 3 bis 6 bilden eine Lichtwellenleiter-Baugruppe 1A. Skizziert ist weiterhin, wie die auskoppelseitigen Teilstrahlen 6a eine vorbestimmte Bearbeitungsfläche eines Werkstücks, in diesem Fall einen transparenter Träger 7 mit einer abzutragenden rückseitigen Beschichtung 8, bestrahlen. Die Endflächen des Strahlteiler- und Fokussierungselements 3, der Lichtleitfasern 5 und der Auskopplungsplatte 6 sind entspiegelt.

Das diffraktive Element (2) teilt den Primärstrahl 2a in eine der Anzahl der Lichtleitfasern 5 entsprechende Anzahl von Teilstrahlen 3a auf und koppelt diese in die Einzelfasern ein. Durch die Aufteilung nimmt die Leistungs- und Energiedichte an den einzelnen Faserendflächen ab. Das diffraktive Element 3 muß zum Vermeiden von Verlusten aus einem bei der Wellenlänge der Laserstrahlung transmittierenden, absorptionsarmen Material hergestellt sein. Für Nd:YAG-Laserstrahlung ist Quarzglas ein geeigneter Werkstoff. Die Anordnung der Foki in der Einkoppelebene 5a der Lichtleitfasern 5 wird durch das diffraktive Element 3 festgelegt.

Dieser Teil der Darstellung ist gleichzeitig als eine Skizze zu einem Herstellungschritt der Laseranordnung (Markieren, Belichten) der Halteplatte 4, welche die Lichtleitfasern 6 hält und deren Enden ausrichtet, anzusehen: Ist ein vorgefertigter Grundkörper der Halteplatte beispielsweise mit einem photosensitiven Material beschichtet, kann dieses durch Bestrahlung mit der Laserstrahlung (den Teilstrahlen 3a) entfernt oder modifiziert werden. In einem folgenden Herstellungsschritt sind an diesen Stellen Durchgangsbohrungen für die Fasern anzufertigen, beispielsweise durch Ätzen oder ggfs. direkt durch lasergestützten Materialabtrag.

Da nach der Ausarbeitung dieser Durchführungen die Positionen der einkoppelseitigen Faserenden relativ zueinander feststehen, muß dann nur noch die Halteplatte als Ganzes justiert und fixiert werden. Sie kann beispielsweise (was in der Figur nicht dargestellt ist) durch zwei gekreuzte konische Vertiefungen auf ihrer Unterlage ausgerichtet sein. Diese Unterlage ist durch drei Achsen mit geeigneten Verstellern justierbar. Die von ausgewählten, einzelnen Fasern transmittierte Intensität wird während der Justage als Meßsignal verwendet.

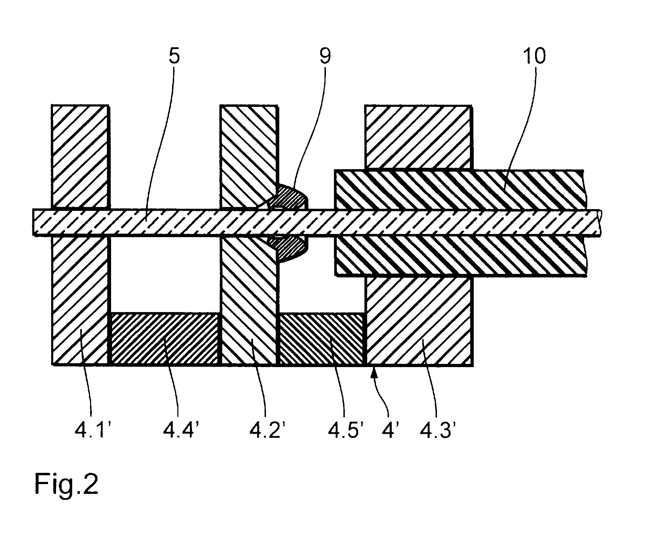

Fig. 2 zeigt eine mögliche, gegenüber Fig. 1 modifizierte Ausführung einer Halteplatte 4', an der die von ihr aufgenommenen Lichtleitfasern 5 befestigt werden können. Die Halteplatte 4' kann zur besseren Stabilisierung der Fasern mit großer Dicke (Tiefe) ausgebildet sein, oder sie ist wie in der Figur dargestellt - aus mehreren Teilplatten 4.1' bis 4.3' gebildet, die jeweils über Distanzringe 4.4' und 4.5' miteinander verbunden sind. Die Fasern 5 werden von rechts in die miteinander ausgerichteten Bohrungen 4.3a', 4.2a' und 4.la' der Teilplatten eingeführt. Die Faserendflächen werden von der dem Laser zugewandten (in der Figur linken) Teilplatte 4.1' her ausgerichtet, so daß diese Platte hochpräzise gefertigt werden muß. Die Fasern 5 können bündig mit der äußeren (linken) Stirnfläche der linken Teilplatte 4.1' abschließen oder (wie hier skizziert) geringfügig aus dieser herausstehen. Die mittlere Teilplatte 4.2' trägt hier so ausgeführte Bohrungen, daß diese in einer Ausnehmung einen die Fasern fixierenden Kleber 9 aufnehmen können. Die rechte Teilplatte 4.3' dient der Zug- und Knickentlastung der Fasern und zur Aufnahme der Faserumhüllung 10, die im Bereich der beidne linken Teilplatten 4.1', 4.2' entfernt ist.

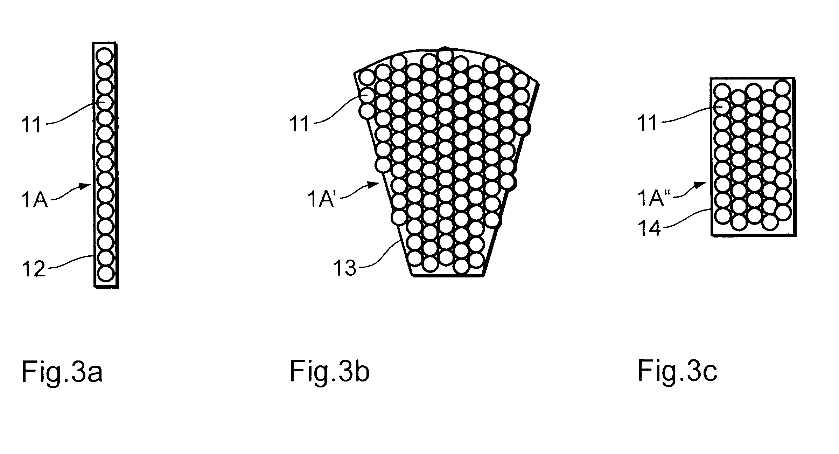

Die aus den Lichtleitfasern austretende Laserstrahlung kann im Rahmen eines Bearbeitungsvorganges direkt auf ein Werkstück eingestrahlt werden. Durch verschiedene geometrische Anordnung der Faserendflächen 11 - wie in Fig. 3a bis 3c in einer Draufsicht auf die Auskoppelseite dreier verschiedener Lichtleiter-Baugruppen 1A, 1A' und 1A" dargestellt - kann eine geeignet geformte Bearbeitungszone erzeugt werden: Linie bzw. Balken 12, Sektor (13), Rechteck 14 etc..

Insbesondere bei transparenten Werkstücken, auf deren faserabgewandter Seite Beschichtungen vorhanden sind, welche abgetragen werden sollen (vgl. die Ziffern 7 und 8 in Fig. 1), ist die direkte Anwendung geeignet positionierter Fasern eine elegante, einfache und preiswerte Lösung. Durch das transparente Werkstück sind die Faserendflächen vor Verschmutzung und folglich Zerstörung durch Abbrand geschützt.

In einer anderen Auspragung des Erfindungsgedankens werden statt normaler Lichtleitfasern solche mit vergrößerten Eintrittsflächen, sogenannten Tapern, verwendet, wie sie von der Herstellung an Glasfasern übrigbleiben. Hier ist die Leistungsdichtereduktion auf der Einkoppelseite, wo der kritische Übergang in das höherbrechende Medium erfolgt, durch eine größere Fläche erreicht. Einzelne Foki sind hierbei nicht unbedingt nötig; das auf die Zwischenräume zwischen den Faserkernen fallende Licht wird teilweise im Mantel geführt und kann durch geeignete Vorkehrungen, wie etwa eine Anrauhung, ausgekoppelt und weggekühlt werden. Gleiches gilt für die Laserstrahlung, die zwischen die Fasern eindringt.

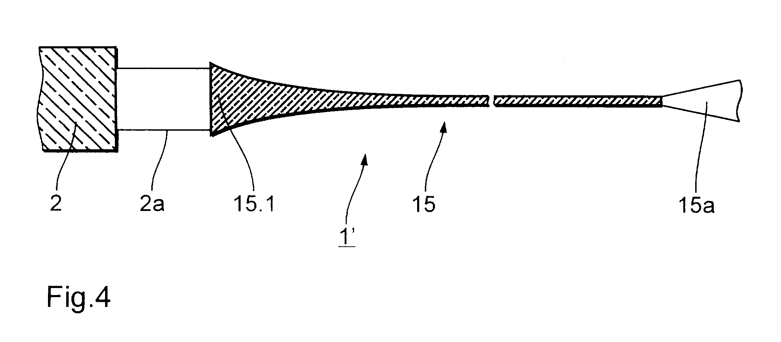

Fig. 4 illustriert, wie in einer Laseranordnung 1' gemäß einer weiteren Fortführung des Erfindungsgedankens der vom Laser 2 ausgehende primäre Laserstrahl 2a in eine einzelne Lichtleitfaser 15 - die hier, mit der zugehörigen (nicht dargestellten) Halterung allein die Lichtleiter-Baugruppe bildet - mit auf die Pulsleistung abgestimmtem, großem Taper 15.1 eingekoppelt wird. Am dem Laser abgewandten (auskoppelseitigen) Ende der Lichtleitfaser 15 wird die Laserstrahlung als Sekundärstrahl 15a wieder ausgekoppelt.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten und beanspruchten Lösung auch in anders gearteter Ausführung Gebrauch machen.

## Patentansprüche

1. Laseranordnung (1; 1'), mit einem gütegeschalteten Laser (2), insbesondere einem elektrooptisch oder durch Phasenkonjugation gütegeschalteten Festkörperlaser, und einer Lichtwellenleiter-Baugruppe (1A; 15), die mindestens eine Lichtleitfaser (5; 15) aufweist, zur Übertragung der Laserstrahlung,
**dadurch gekennzeichnet**, daß die effektive Laserstrahlungs-Einkoppelfläche der Lichtwellenleiter-Baugruppe größer als die mittlere Querschnittsfläche einer einzelnen Lichtleitfaser ist.

2. Laseranordnung nach Anspruch 1, **dadurch gekennzeichnet**, daß die Lichtwellenleiter-Baugruppe (15) mindestens eine Lichtleitfaser (15) mit einer gegenüber ihrer mittleren Querschnittsfläche vergrößerten Einkoppelfläche aufweist, die insbesondere durch einen Taper (15.1) gebildet ist.

3. Laseranordnung nach Anspruch 1 oder 2, **dadurch gekennzeichnet**, daß die Lichtwellenleiter-Baugruppe (1A) eine Mehrzahl von, insbesondere gebündelten, Lichtleitfasern (5) umfaßt.

4. Laseranordnung nach einem der vorhergehenden Ansprüche, **dadurch gekennzeichnet**, daß einer Resonatorendfläche des Lasers (2) ein den primären Laserstrahl (2a) in eine Mehrzahl von Teilstrahlen (3a) zerlegendes und die Teilstrahlen im wesentlichen in eine Ebene (5a) fokussierendes optisches Element (3) zugeordnet ist.

5. Laseranordnung nach Anspruch 3 oder 4, **dadurch gekennzeichnet**, daß die Lichtwellenleiter-Baugruppe ein Halteelement (4) für die Lichtleitfasern (5) aufweist, das insbesondere nahe der Fokussierungsebene (5a) des zerlegenden und fokussierenden Elementes (3) angeordnet ist.

6. Laseranordnung nach Anspruch 4 oder 5, **dadurch gekennzeichnet**, daß das zerlegende und fokussierende optische Element (3) eine Struktur mit einer Mehrzahl von diffraktiven und/oder den einfallenden Laserstrahl in unterschiedliche Richtungen reflektierenden Bereichen aufweist.

7. Laseranordnung nach Anspruch 5 oder 6, **dadurch gekennzeichnet**, daß das zerlegende und fokussierende optische Element zusammenhängend mit einem Resonatorspiegel ausgeführt, insbesondere auf der dem Lasermedium zugewandten Seite als Resonatorspiegel ausgebildet, ist.

8. Laseranordnung nach einem der vorhergehenden Ansprüche, **dadurch gekennzeichnet**, daß an dem dem Laser (2) abgewandten Ende der Lichtwellenleiter-Baugruppe (1A) ein Schutz- und/oder Strahlhomogenisierungselement (6), insbesondere ein Schutzglas, eine Streuscheibe, ein diffraktives Element oder ein mehrfachreflektierendes Element, vorgesehen ist.

9. Laseranordnung nach Anspruch 8, **dadurch gekennzeichnet**, daß das Strahlhomogenisierungselement (6) mit der auskoppelseitigen Endfläche der Lichtleitfaser oder - fasern (5) fest verbunden, insbesondere in diese integriert, ist.

10. Laseranordnung nach einem der Ansprüche 3 bis 9, **dadurch gekennzeichnet**, daß die auskoppelseitigen Endflächen (11) der Lichtleitfasern in einer regulären geometrischen Anordnung (12, 13, 14), insbesondere in Linien-, Rechteck, Kreis- oder Kreissegmentanordnung, gehaltert sind.

11. Verfahren zur Herstellung einer Laseranordnung nach einem der Ansprüche 3 bis 10, **dadurch gekennzeichnet**, daß mittels des zerlegenden und fokussierenden optischen Elements (3) auf einen Halteelement-Grundkörper die Teilstrahlen (3a) abgebildet und hierdurch die Orte für die Fixierung der einkoppelseitigen Endflächen der einzelnen Lichtleitfasern (5) bestimmt und anschließend an diesen Orten Durchführungen (4.la' bia 4.3a') im Halteelement-Grundkörper für die Lichtleitfasern erzeugt werden.

12. Verfahren nach Anspruch 11, **dadurch gekennzeichnet**, daß ein Halteelement-Grundkörper mit einer photosensitiven Beschichtung eingesetzt wird.

13. Verfahren nach Anspruch 11 oder 12, **dadurch gekennzeichnet**, daß die Durchführungen in dem Halteelement (4; 4') unter Nutzung der Teilstrahlen (3a) unmittelbar in der Laseranordnung (1) ausgearbeitet werden.
